# EUROPÄISCHE PATENTANMELDUNG

(11) **EP 3 943 258 A1**
(43) Veröffentlichungstag der Anmeldung: **26.01.2022**
(21) Anmeldenummer: 21186474.9
(22) Anmeldetag: 19.07.2021
(51) Int. Cl.: B25J 15/00, B25J 15/06

(54) **HANDHABUNGSVORRICHTUNG ZUR HANDHABUNG VON BRETTERN ODER ANDEREN FLACHEN WERKSTÜCKEN**

(30) Priorität: 23.07.2020 DE 102020119469
(71) Anmelder: H.I.T. Maschinenbau GmbH + Co. KG, 86833 Ettringen (DE)
(72) Erfinder: Filser, Stefan, 86825 Bad Wörishofen (DE)
(74) Vertreter: Mertzlufft-Paufler, Cornelius

(57) **Zusammenfassung**

Die Erfindung betrifft eine Handhabungsvorrichtung (1) zur Handhabung von Brettern oder anderen flachen Werkstücken (5). Die erfindungsgemäße Handhabungsvorrichtung (1) hat dazu zumindest zwei Längsbalken (2, 3), an denen Querbalken (4) derart verfahrbar sind, dass der Abstand der Querbalken (4) zueinander veränderbar ist, wobei die Querbalken (4) auf den Werkstücken (5) anlegbare Saugbalken (6) tragen, die an den ihnen zugeordneten Querbalken (4) derart verfahrbar sind, dass der Abstand jeweils der an einem der Querbalken (4) gehaltenen Saugbalken (6) veränderbar ist. Um sowohl in Querlage als auch in Längslage lose einander angelegte Werkstücke (5) aufnehmen und anheben zu können, sind die Saugbalken (6) an dem ihnen zugeordneten Querbalken (4) drehbar gelagert (vgl. Fig. 1).

## Beschreibung

Die Erfindung betrifft eine Handhabungsvorrichtung zur Handhabung von Brettern oder anderen flachen Werkstücken.

Brettsperrholzprodukte haben in den letzten Jahrzehnten an Bedeutung zugenommen und werden heute auch im Wohnungsbau sowie auch im kommunalen und gewerblichen Objektbau als statisch tragende Elemente eingesetzt.

Solches Brettsperrholz wird heute in der Regel industriell aus Brettern als Rohmaterial für die Einzellagen hergestellt. Diese Bretter werden durch Verleimung miteinander verbunden, wobei der Aufbau einer Brettsperrholzplatte mit zueinander im rechten Winkel orientierten Brettlagen bzw. Einschichtplatten erfolgt. Die aus schmalseitenverleimten Platten oder aus lose zusammengelegten Lamellen hergestellten Brettsperrholzplatten werden anschließend in Querlagen oder in Längslagen zusammengelegt und miteinander verleimt, um nach dem Leimvorgang die entsprechenden, beispielsweise für Türen oder Fenster notwendigen Ausschnitte in den Plattenverbund einzuarbeiten. Dabei ist die zuletzt genannte Produktionsart wesentlich kostengünstiger, weshalb vorzugsweise durchgängige Lamellen zusammengelegt und die beispielsweise für Türen oder Fenster erforderlichen Ausschnitte im Nachgang mit einer Plattenbearbeitung ausgesägt werden. Soweit zum Zusammenlegen der plattenförmigen Werkstücke auf Handhabungsvorrichtungen zurückgegriffen wird, können diese Handhabungsvorrichtungen nur Querlagen oder Längslagen anheben, wobei bei wechselnden Plattenbreiten die nicht belegten Greifer der an den Platten anlegbaren Greifer vor Leim geschützt werden müssen.

Es besteht daher insbesondere die Aufgabe, eine Handhabungsvorrichtung der eingangs erwähnten Art zu schaffen, welche die lose in Quer- oder Längslagen zusammengelegten Bretter gegebenenfalls auch mit Ausschnitten zusammenstellen und als komplette Lage bewegen und beispielsweise in ein Pressbett einlegen kann.

Die erfindungsgemäße Lösung dieser Aufgabe besteht bei der Handhabungsvorrichtung der eingangs erwähnten Art in den Merkmalen des geltenden Patentanspruchs 1.

Die erfindungsgemäße Handhabungsvorrichtung ist zur Handhabung von Brettern, Platten oder anderen flachen Werkstücken vorgesehen. Die erfindungsgemäße Handhabungsvorrichtung weist dazu zumindest einen Längsbalken, vorzugsweise zumindest zwei Längsbalken oder -führungen auf, an dem/denen Querbalken oder -führungen derart verfahrbar sind, dass der Abstand der Querbalken zueinander veränderbar ist. Wird der Abstand der Querbalken zueinander beispielsweise verkürzt, kann die erfindungsgemäße Handhabungsvorrichtung dadurch an eine reduzierte Breite des miteinander zu verleimenden Verbunds angepasst werden. Auch ist es möglich, den Abstand zwischen einzelnen, einander benachbarten Querbalken derart zu vergrößern, dass diese Querbalken den für eine Tür- oder Fensteröffnung erforderlichen Ausschnitt aussparen und die an diesen benachbarten Querbalken befindlichen Saugbalken nicht mit Leim in Berührung kommen können. Die von den Querbalken getragenen und auf den plattenförmigen Werkstücken anlegbaren Saugbalken sind an dem ihnen zugeordneten Querbalken derart verfahrbar, dass der Abstand jeweils der an einem Querbalken gehaltenen Saugbalken zueinander veränderbar ist. Somit lassen sich auch die Saugbalken an den ihnen zugeordneten Querbalken derart verfahren, dass die Saugbalken in einem außerhalb der für Fenster- oder Türöffnungen erforderlichen Ausschnitte angeordneten Bereich der Werkstücke an diese angelegt werden können. Um diese Lamellen oder andere plattenförmige Werkstücke je nach Bedarf in Querlage oder Längslage aneinander anlegen zu können, können die Saugbalken an den ihnen zugeordneten Querbalken drehbar gelagert sein.

Dabei wird eine Ausführung bevorzugt, bei der die Saugbalken relativ zu den ihnen zugeordneten Querbalken etwa im gleichen Winkel verdrehbar sind. Durch eine entsprechende Stellung der jedem einzelnen Saugbalken zugeordneten Drehantriebe oder durch eine beispielsweise zeilenweise mechanische Verbindung der Saugbalken sowie eine gemeinsame Steuerung der den mechanisch zwangsweise miteinander drehbeweglich verbundenen Saugbalken zugeordneten Drehantriebe kann eine solche Drehung der Saugbalken im gleichen Winkel ermöglicht werden.

Um eine Ausrichtung der Saugbalken auf einen in Längslage oder Querlage ausgebildeten Plattenverbund in einfacher Weise zu ermöglichen, ist es vorteilhaft, wenn die Saugbalken zwischen einer in Längserstreckung des ihnen zugeordneten Querbalkens angeordneten ersten Drehposition und einer quer zur Längserstreckung des ihnen zugeordneten Querbalkens angeordneten zweiten Drehposition verdrehbar sind.

Das Verfahren der an den ihnen zugeordneten Querbalken gehaltenen Saugbalken wird erleichtert und die dazu erforderliche Steuerung kann vereinfacht ausgestaltet werden, wenn die Saugbalken zeilen- oder reihenweise einander zugeordnet an den Querbalken verfahrbar sind.

Weiterbildungen gemäß der Erfindung ergeben sich aus der nachfolgenden Beschreibung in Verbindung mit den Ansprüchen sowie der Zeichnung. Nachstehend wird die Erfindung anhand eines bevorzugten Ausführungsbeispieles noch näher beschrieben.

Es zeigt:

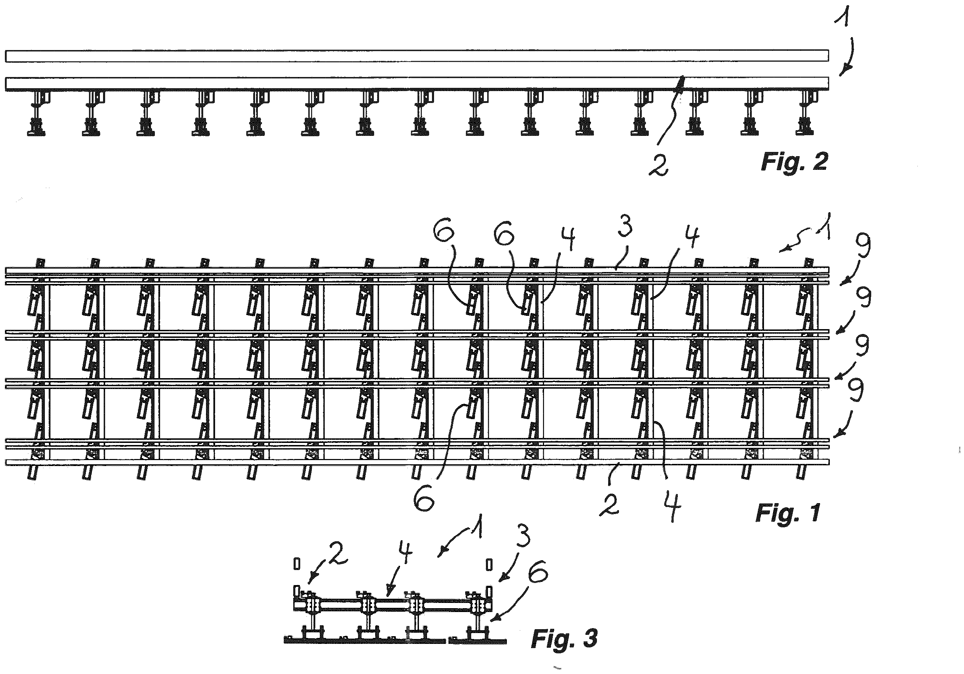

- Fig. 1: eine Handhabungsvorrichtung zur Handhabung von Brettern oder anderen flachen Werkstücken in einer Draufsicht, wobei die Handhabungsvorrichtung zwei Längsbalken hat, an denen Querbalken derart verfahrbar sind, dass der Abstand der Querbalken zueinander veränderbar ist, wobei die Querbalken auf den Werkstücken anlegbare Saugbalken tragen, die an den ihnen zugeordneten Querbalken jeweils derart verfahrbar sind, dass der Abstand der an einem der Querbalken gehaltenen Saugbalken veränderbar ist, und wobei die Saugbalken an den ihnen zugeordneten Querbalken drehbar gelagert sind,
- Fig. 2: die Handhabungsvorrichtung aus Fig. 1 in einer Seitenansicht auf die Längsseite dieser Handhabungsvorrichtung,
- Fig. 3: die Handhabungsvorrichtung aus den Fig. 1 und 2 in einer Seitenansicht auf die Stirnseite dieser Handhabungsvorrichtung,

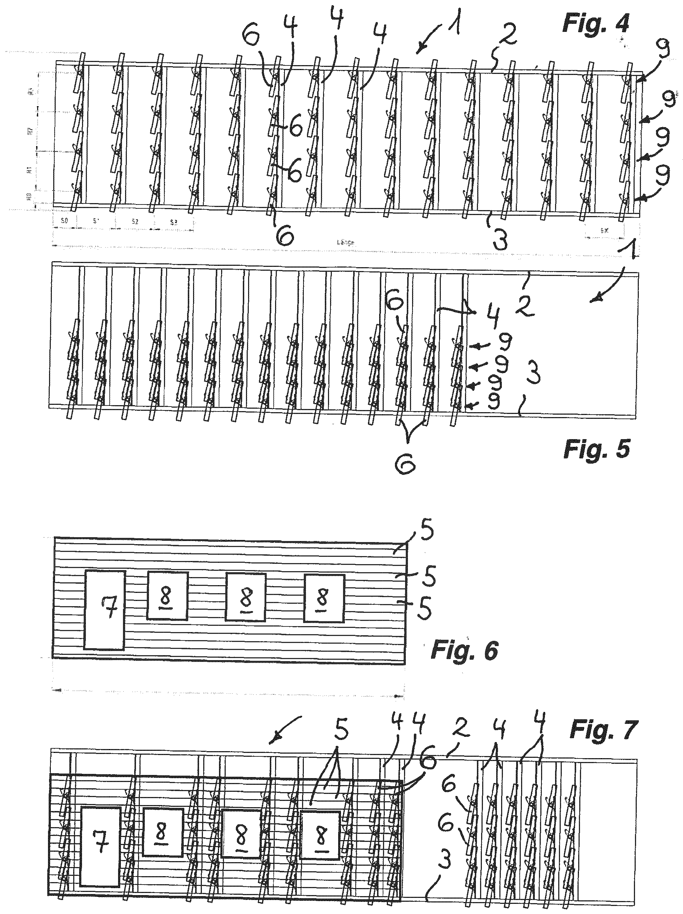

- Fig. 4: die Handhabungsvorrichtung aus den Fig. 1 bis 3 in einer Draufsicht, wobei die an den Querbalken verdrehbar gehaltenen Saugbalken derart verdreht sind, dass diese Querbalken längs ausgerichtete und lose aneinander anliegende Werkstücke ergreifen können, wobei der Abstand der Querbalken zueinander so gewählt ist, dass ein vergleichsweise langer Verbund von Werkstücken von der Handhabungsvorrichtung aufgenommen werden kann,
- Fig. 5: die Handhabungsvorrichtung aus den Fig. 1 bis 4 in einer Draufsicht, wobei der Abstand der Querbalken zueinander sowie der an ihnen jeweils gehaltenen Saugbalken derart kurz gewählt ist, dass der aus den längs ausgerichteten Werkstücken gebildete Verbund längs- und schmalseitig vergleichsweise kurz ausgestaltet ist,
- Fig. 6: ein aus längs ausgerichteten Werkstücken gebildeter Verbund aus Brettern und insbesondere aus Brettsperrholz, wobei in diesem Verbund bereits die für Tür- und Fensteröffnungen erforderlichen Ausschnitte vorgesehen sind,
- Fig. 7: die Handhabungseinrichtung aus den Fig. 1 bis 6, wobei die entlang der Längsbalken verfahrbaren Querbalken sowie die an den Querbalken verfahrbaren Saugbalken in ihrem Abstand zueinander derart ausgerichtet und eingestellt sind, dass die Handhabungsvorrichtung den in Fig. 6 gezeigten Verbund von Werkstücken ergreifen kann, wobei einzelne nicht benötigte Querbalken mit ihren Saugbalken außerhalb des Werkstück-Verbunds gelagert sind,

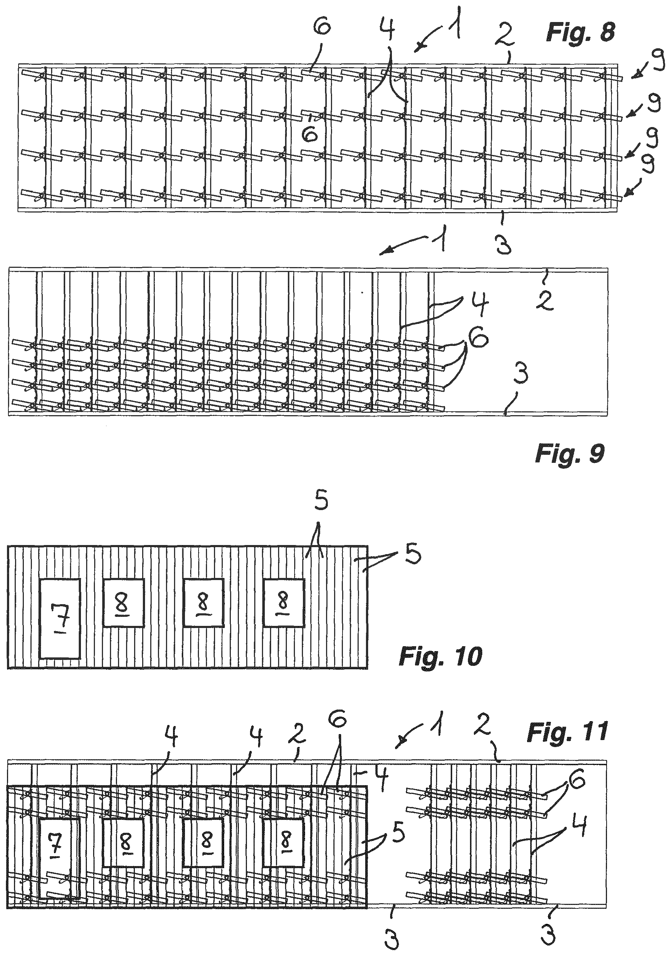

- Fig. 8: die Handhabungsvorrichtung aus den Fig. 1 bis 7 mit den an den Längsbalken verfahrbaren und die Saugbalken tragenden Querbalken, wobei die an dem ihnen zugeordneten Querbalken verdrehbar gehaltenen Saugbalken derart ausgerichtet sind, dass die Handhabungsvorrichtung zur Abnahme von quer ausgerichteten Werkstücken eingestellt ist,
- Fig. 9: die Handhabungsvorrichtung aus den Fig. 1 bis 8, wobei der Abstand der Querbalken zueinander und der Abstand der an den Querbalken verfahrbaren Saugbalken derart gering gewählt ist, dass die Handhabungsvorrichtung auch einen Werkstück-Verbund mit gegenüber Fig. 8 vergleichsweise geringen Außenabmessungen aufnehmen kann,

- Fig. 10: ein aus quer ausgerichteten und lose aneinander anliegenden Werkstücken gebildeter Verbund, wobei in diesen Werkstück-Verbund die für Tür- und Fensteröffnungen erforderlichen Ausschnitte bereits freigehalten sind, und
- Fig. 11: die Handhabungsvorrichtung aus den Fig. 1 bis 10 in einer Draufsicht, wobei die an den Längsbalken verfahrbaren Querbalken und die an dem ihnen zugeordneten Querbalken verfahrbaren Saugbalken derart voneinander beabstandet angeordnet und ausgerichtet sind, dass die Handhabungsvorrichtung auch den in Fig. 10 gezeigten Werkstück-Verbund aufnehmen kann, und wobei die zur Aufnahme dieses Werkstückverbundes nicht benötigten Querbalken mit ihren Saugbalken außerhalb des durch den Werkstück-Verbund gebildeten Bereichs der Handhabungsvorrichtung gelagert sind.

In den Fig. 1 bis 11 ist eine Handhabungsvorrichtung 1 zur Handhabung von Brettern, Lamellen oder anderen flachen Werkstücken dargestellt. Die Handhabungsvorrichtung 1 weist zumindest zwei Längsbalken oder -führungen 2, 3 auf, an denen Querbalken oder -führungen 4 derart verfahrbar sind, dass der Abstand der Querbalken 4 zueinander veränderbar ist. Während die Querbalken in den Fig. 4 und 8 den größtmöglichen Abstand zueinander aufweisen, sind die an den Längsbalken 2, 3 verfahrbaren Querbalken in den Fig. 5 und 9 in dem demgegenüber geringsten Abstand angeordnet.

Aus einem Vergleich der Fig. 1 sowie der Fig. 4, 5, 7, 8, 9 und 11, wird deutlich, dass die Querbalken 4 auf den Werkstücken 5 anlegbare Saugbalken tragen, die an dem ihnen zugeordneten Querbalken 4 derart verfahrbar sind, dass der Abstand der an einem der Querbalken 4 gehaltenen Saugbalken 6 veränderbar ist. Während der Abstand der an ihren zugeordneten Querbalken 4 verfahrbaren Saugbalken 6 in den Fig. 4 und 8 vergleichsweise groß gewählt ist, ist der Abstand dieser Saugbalken 6 in den Fig. 5 und 9 demgegenüber minimal gehalten.

Aus einem Vergleich insbesondere der Fig. 4 und 8 wird deutlich, dass die Saugbalken 6 an dem ihnen zugeordneten Querbalken 4 drehbar gelagert sind. Die Saugbalken 6 lassen sich somit zwischen der in Fig. 4 gezeigten und in Längserstreckung des ihnen zugeordneten Querbalkens 4 angeordneten ersten Drehposition und der in Fig. 8 gezeigten und hier quer zur Längserstreckung des ihnen zugeordneten Querbalkens 4 angeordneten zweiten Drehposition verdrehen. Aus einem Vergleich der Fig. 4 und 7 einerseits sowie der Fig. 8 und 11 andererseits wird deutlich, dass sich die Saugbalken 6 in ihrer Längserstreckung somit derart ausrichten lassen, dass sich die Handhabungsvorrichtung 1 wahlweise zur Aufnahme von längs oder auch quer ausgerichteten Werkstücken 5 verwenden lässt. Während die Handhabungsvorrichtung 1 in den Fig. 4, 5 und 7 zur Aufnahme von längs ausgerichteten Werkstücken 5 eingestellt ist, ist die Handhabungsvorrichtung 1 in den Fig. 8, 9 und 11 demgegenüber zur Aufnahme von quer ausgerichteten Werkstücken 5 eingestellt.

Wie aus einem Vergleich der Fig. 6 und 7 bzw. 10 und 11 deutlich wird, kann der Abstand der Querbalken 4 zueinander derart verkürzt werden, dass die Handhabungsvorrichtung 1 dadurch an eine reduzierte Breite des miteinander zu verleimenden Verbunds von Werkstücken angepasst ist. Auch ist es möglich, den Abstand zwischen einzelnen einander benachbarten Querbalken 4 derart zu vergrößern, dass diese Querbalken 4 den für eine Tür- oder Fensteröffnung erforderlichen Ausschnitt 7, 8 aussparen und die an diesen benachbarten Querbalken 4 befindlichen Saugbalken 6 nicht mit Leim in Berührung kommen. Die von den Querbalken 4 getragenen und auf den Werkstücken 5 anlegbaren Saugbalken 6 sind an den ihnen zugeordneten Querbalken 4 derart verfahrbar, dass der Abstand jeweils der an einem der Querbalken 4 gehaltenen Saugbalken 6 zueinander veränderbar ist. Somit lassen sich auch die Saugbalken 6 derart an den ihnen zugeordneten Querbalken 4 verfahren, dass diese Saugbalken 6 in einem außerhalb der für die Fenster- oder Türöffnungen erforderlichen Ausschnitte 7, 8 an die Werkstücke 5 angelegt werden können.

Aus einer zusammenschauenden Betrachtung insbesondere der Fig. 4, 5, 7 einerseits und der Fig. 8, 9, 11 andererseits wird deutlich, dass die Saugbalken 6 in Zeilen oder Reihen 9 einander zugeordnet an den Querbalken 4 verfahrbar sind.

In den Figuren 4, 5, 8, 9 ist dargestellt, dass die Querbalken 4 an den Längsbalken 2, 3 derart verfahren werden können, dass der Abstand der Querbalken 4 zueinander gleichmäßig veränderbar ist.

Mithilfe der hier dargestellten Handhabungsvorrichtung 1 lassen sich die in Quer- oder auch in Längslage lose zusammengelegten Lamellen gegebenenfalls auch mit den für Fenster- oder Türöffnungen oder dergleichen erforderlichen Ausschnitten 7, 8 zusammenstellen und als komplette Lage in ein Pressbett einlegen. Da die hier dargestellte Handhabungsvorrichtung 1 somit das Zusammenstellen eines Verbunds aus in Querlage oder Längslage angeordneten Werkstücken erlaubt, und da dieser Verbund auch Ausschnitte 7, 8 aufweisen kann, ohne dass diese Ausschnitte 7, 8 erst nachträglich durch Plattenbearbeitung ausgesägt werden müssten, wird eine zeit- und materialsparende Herstellung eines aus Lamellen, Brettern, Brettsperrholzplatten oder anderen flachen Werkstücken zusammengeleimten Werkstück-Verbunds wesentlich erleichtert.

### Bezugszeichenliste

- 1: Handhabungsvorrichtung
- 2: Längsbalken oder -führung
- 3: Längsbalken oder -führung
- 4: Querbalken oder -führung
- 5: Werkstück
- 6: Saugbalken
- 7: Ausschnitt für Türöffnung
- 8: Ausschnitt für Fensteröffnung
- 9: Zeile oder Reihe von, an dem Querbalken 4 gehaltenen Saugbalken 6

## Patentansprüche

1. Handhabungsvorrichtung (1) zur Handhabung von Brettern oder anderen flachen Werkstücken (5) mit zumindest einem Längsbalken (2,3), insbesondere mit zumindest zwei Längsbalken (2, 3), an dem/denen Querbalken (4) derart verfahrbar sind, dass der Abstand der Querbalken (4) zueinander veränderbar ist, wobei die Querbalken (4) auf den Werkstücken (5) anlegbare Saugbalken (6) tragen, die an den ihnen zugeordneten Querbalken (4) derart verfahrbar sind, dass der Abstand jeweils der an einem der Querbalken (4) gehaltenen Saugbalken (6) veränderbar ist.

2. Handhabungsvorrichtung nach Anspruch 1, **dadurch gekennzeichnet, dass** die Saugbalken (6) an dem ihnen zugeordneten Querbalken (4) drehbar gelagert sind, insbesondere wobei die Saugbalken (6) relativ zu dem ihnen zugeordneten Querbalken (4) etwa im gleichen Winkel verdrehbar sind.

3. Handhabungsvorrichtung nach Anspruch 1 oder 2, **dadurch gekennzeichnet, dass** die Saugbalken (6) zwischen einer in Längserstreckung des ihnen zugeordneten Querbalkens (4) angeordneten ersten Drehposition und einer quer zur Längserstreckung des ihnen zugeordneten Querbalkens (4) angeordneten zweiten Drehposition verdrehbar sind.

4. Handhabungsvorrichtung nach einem der Ansprüche 1 bis 3, **dadurch gekennzeichnet, dass** die Saugbalken (6) zeilenweise einander zugeordnet an den Querbalken (4) verfahrbar sind.

5. Handhabungsvorrichtung nach einem der Ansprüche 1 bis 4, **dadurch gekennzeichnet, dass** die Querbalken (4) an dem/den Längsbalken (2, 3) derart verfahrbar sind, dass der Abstand der Querbalken (4) zueinander gleichmäßig veränderbar ist.
